# EUROPÄISCHE PATENTSCHRIFT

(11) **EP 1 129 322 B1**
(45) Veröffentlichungstag und Bekanntmachung des Hinweises auf die Patenterteilung: **12.01.2005**
(21) Anmeldenummer: 99958007.9
(22) Anmeldetag: 06.11.1999
(51) Int. Cl.: G01B 11/06, G01B 11/22, G11B 7/26, H01L 21/66, B29D 17/00

(54) **VERFAHREN ZUM BESTIMMEN DER DICKE EINER VIELFACH-DÜNNSCHICHTSTRUKTUR**
METHOD FOR DETERMINING THE THICKNESS OF A MULTI-THIN-LAYER STRUCTURE
PROCEDE PERMETTANT DE DETERMINER L'EPAISSEUR D'UNE STRUCTURE A PLUSIEURS COUCHES MINCES

(30) Priorität: 12.11.1998 DE 19852323
(43) Veröffentlichungstag der Anmeldung: 05.09.2001
(73) Patentinhaber: Steag HamaTech AG, 75447 Sternenfels (DE)
(72) Erfinder: HERTLING, Rolf, D-52074 Aachen (DE); SCHAUDIG, Wolfgang, D-41236 Mönchengladbach (DE); WINDELN, Wilbert, D-52525 Heinsberg (DE)
(74) Vertreter: Wagner, Karl H., Dipl.-Ing.
(86) Internationale Anmeldenummer: PCT/EP1999/008534
(87) Internationale Veröffentlichungsnummer: WO 2000/029808

(56) Entgegenhaltungen:
- DE-A- 4 228 870
- US-A- 5 587 792
- US-A- 5 835 226
- US-A- 5 900 633

## Beschreibung

Die Erfindung betrifft ein Verfahren zum Bestimmen der Dicke wenigstens einer Schicht auf einem Substrat.

Beim Aufbringen von Schichten auf ein Substrat ist es erforderlich, daß eine bestimmte Schichtdicke geschaffen bzw. eingehalten werden muß. Dies gilt insbesondere bei der Herstellung von Speichermedien, insbesondere optischen Datenspeichern wie CD's, CD-R's, DVD's, CD-RW's, DVD-RW's, MO's und weiteren Datenspeichern, bei denen verschiedene Schichten, wie tnformationsträger-, Schutz-/oder Reflexions-Schichten aufgebracht sind. Zur Messung der Schichtdicken für die Qualitätskontrolle und während des Fertigungsverfahrens sind verschiedene Schichtdicken- Meßverfahren bekannt, die jedoch nur auf nichtgegroovten Substraten eingesetzt werden können. Zur Bestimmung der Groovegeometrie werden Reflexion und/oder Transmission für verschiedene Beugungsordnungen gemessen. Derartige Meßverfahren mit höheren Beugungsordnungen des Lichts bedürfen jedoch aufwendiger Meßeinrichtungen und Justierungsmaßnahmen. Es ist nicht oder nur mit geringer Genauigkeit möglich, die Schichtdicken zu messen, wenn das Substrat selbst Strukturen, beispielsweise Gräben, aufweist, die beispielsweise bei optischen Speichermedien als Grooves bezeichnet werden und für das Schreiben, Lesen und/oder Löschen von Daten erforderlich sind.

Aus der DE-A-42 28 870 ist es bekannt, Schichtdicken aus reflexionsspektrometrischen Daten im Vergleich mit parameterabhängigen Modellrechnungen zu ermitteln, ohne dabei jedoch geometrische Strukturen auf der Substratoberfläche unterhalb der Schicht zu berücksichtigen.

Aus der US-A-5 835 226 ist ein Verfahren zum Bestimmen der Dicke einer Schicht in einem Schichtensystem bekannt, das sich auf einer geometrische Strukturen nicht aufweisenden Substratoberfläche befindet. Geometrische Strukturen weder auf der Schichtobecfläche noch auf der Substratoberfläche werden bei diesem bekannten Verfahren berücksichtigt.

Aus der US-A-5 587 792 ist eine Vorrichtung und ein Verfahren zur Dikkenmessung bekannt, bei der bzw. bei dem ein Interferenz-Wellenform-Dispersionsspektrum von Licht, welches an einem mehrschichtigen System reflektiert wird, mit einer Wellenform verglichen wird, die sich durch numerische Berechnung unter Verwendung einer optischen charakteristischen Matrix ergibt. In diesem Verfahren werden Strukturen weder auf der Schicht- noch auf der Substratoberfläche berücksichtigt.

Die nicht vorveröffentlichte Druckschrift WO 99/31483 beschreibt ein spektrometrisches Verfahren zur Dickenbestimmung und Zusammensetzung von Schichten, die während eines Herstellungsverfahrens auf integrierte Halbleiterschaltungen aufgebracht werden. Dieses Verfahren berücksichtigt nicht Strukturen auf den Schichten oder dem HalbleiterBauelement als weitere Parameter bei der Berechnung von Reflextionsund/oder Transmissions-Lichtintensitätswerte unter Verwendung eines Internationsmodells.

Der Erfindung liegt die Aufgabe zugrunde, ein Verfahren zu schaffen, das einen einfachen und zuverlässigen Meßaufbau gestartet, sichere Meßwerte insbesondere auch während des Schichtaufbringverfahrens zu dessen Steuerung und Regelung liefert und auch bei Substraten mit darin enthaltenen oder auf deren Oberfläche ausgebildeten Strukturen zuverlässige Meßwerte liefert, sowie die Bestimmung der Struktur-Geometrie ermöglicht.

Die gestellte Aufgabe wird bei einem Verfahren zum Bestimmen der Dikke wenigstens einer Schicht auf einem Substrat gelöst durch
- Messen von Reflexions- und/oder Transmissions-Lichtintensitäts-Werten nullter Beugungsordnung in Abhängigkeit von der Wellenlänge,
- Berechnen der Reflexions- und/oder Transmissions-Lichtintensitäts-Werte unter Verwendung eines Iterationsmodells, in das die einzelnen Schichtparameter und die geometrischen Abmessungen der geometrischen Strukturen des Substrats als weitere Parameter eingehen, und
- Ändern der Schicht Parameter bis zur Herbeiführung einer Übereinstimmung zwischen den gemessenen und berechneten Werten.

Durch die erfindungsgemäßen Maßnahmen ist im Gegensatz zu den herkömmlichen Meßverfahren eine korrekte Bestimmung der Schichtdicken auch von Substraten mit Strukturen möglich, wie dies beispielsweise bei CD-Rohlingen mit Grooves der Fall ist, auf denen unterschiedliche Schichten mit jeweils vorgegebenen Schichtdicken aufgebracht werden müssen, um optische Datenspeicher herzustellen. Darüber hinaus ist das Verfahren und insbesondere die dafür vorgesehene Meßeinrichtung sehr einfach, weil bei dem erfindungsgemäßen Verfahren die Reflexions/Transmissions-Lichtintensitätswerte lediglich der nullten Beugungsordnung gemessen werden müssen. Dies ermöglicht eine sehr einfache Meßanordnung, die insbesondere auch im Herstellungsprozess beispielsweise von optischen Datenträgem einsetzbar ist. Darüber hinaus ist der Justieraufwand bei dem erfindungsgemäßen Verfahren, bei dem nur Lichtwerte nullter Beugungsordnung gemessen werden, wesentlich geringer als bei herkömmlichen Verfahren. Mit einem einzigen Meßgerät können daher die verschiedensten Meßvorgänge durchgeführt werden, wie dies nachfolgend noch im einzelnen erläutert werden wird.

Mit dem erfindungsgemäßen Verfahren sind insbesondere auch Probenpräparationen nicht mehr erforderlich, da die Dickenbestimmung von Schichten sicher und zuverlässig durchgeführt werden kann, die auf Substraten mit Strukturen aufgebracht sind oder werden. Das Verfahren ist daher insbesondere auch während des Herstellungsverfahrens einsetzbar, also inline-tauglich, da Dickenmessungen und Kontrollen direkt an den produzierten Produkten, wie optischen Datenspeichern, möglich ist.

Gemäß dem erfindungsgemäßen Verfahren werden also die Transmissions-Lichtintensitätswerte in Reflexion und/oder Transmission spekiral, also in Abhängigkeit von der Wellenlänge gemessen. Diese Meßwerte werden dann durch optische Berechnungen ausgewertet. Die Vorgehensweise ist dabei, die Reflexions- und/oder Transmissions-Lichtintensitätswerte aus optischen Modellen für ein Schichtsystem zu berechnen und in jedem Rechenschritt die Schichtdicken und/oder die spektralen Materialparameter, beispielsweise die Brechungsindizes (n) und/oder die Absorptionsindizes (k), solange zu variieren, bis die minimale Abweichung zwischen Messung und Rechnung erreicht ist. Dadurch ist also eine Schichtdickenkontrolle, und damit eine Überwachung der optischen Eigenschaften eines Schichtsystems auf einem Substrat mit Strukturen, beispielsweise bei CD's mit Grooves, möglich.

Gemäß einer bevorzugten Ausführungsformen der Erfindung werden Interferenzen die durch die geometrischen Strukturen entstehen, als weitere Meßwerte verwendet. Das erfindungsgemäße Verfahren gemäß dieser Ausführungsform beruht auf der Berechnung phasenrichtiger Überlagerung elektromagnetischer Teilwellen an den Strukturen, beispielsweise den Grooves des Substrats oder Rohlings, und damit auf den Interferenzen dieser Teilwellen. Durch Variation der Parameter werden dabei die Breite und Tiefe der Strukturen, beispielsweise der Rillen oder Grooves mit in das Meßverfahren einbezogen. Eine optische Übereinstimmung zwischen den Messungen und der Rechnung ergibt sich nur dann, wenn die Strukturparameter, die Breite, die Tiefe und/oder die Abstände der Strukturen oder Rillen voneinander mit denen der Rillen auf der gemessenen Probe übereinstimmen.

Durch die spektrale Abhängigkeit der Änderungen der Reflexionsund/oder Transmissions-Lichtintensitätswerte auf Grund der Strukturen bzw. Rillen oder Grooves im Vergleich zu den Lichtintensitätswerten ohne Strukturen ist bereits in den Lichtintensitätswerten nullter Beugungsordnung die Information über die Strukturparameter, beispielsweise über die Breite, Tiefe und den Abstand der Rillen oder Grooves enthalten.

Gemäß einer besonders vorteilhaften Ausgestaltung der Erfindung werden die geometrischen Abmessungen der Strukturen, also beispielsweise die Tiefen, Breiten und/oder Abstände von Rillen oder Grooves, bestimmt. Diese geometrischen Abmessungen lassen sich vorzugsweise gleichzeitig mit der Bestimmung der Schichtdicken ermitteln. Auf diese Weise ist es beispielsweise bei der Fertigung von optischen Speichermedien möglich, die Qualität des Abformvorgangs zu kontrollieren und zu steuern. Für den Spezialfall, daß auf dem Substrat keine Schichten aufgebracht sind, die Schichtdicken also null sind, ergeben sich die Meßwerte für die geometrischen Abmessungen der Strukturen, wobei es dabei möglich ist, über die gesamte Substratfläche hinweg ortsaufgelöste Messungen dieser geometrischen Strukturen vorzunehmen, um damit Produktionsfehler beim Fertigen der Substrate, beispielsweise beim Spritzgießen von CD-Substraten, schnell zu erkennen.

Eine weitere sehr vorteilhafte Ausführungsform der Erfindung besteht darin, daß die ermittelten Daten der Schichtdicke (n) und/oder geometrischen Strukturen zur Regelung von Fertigungsverfahren zum Aufbringen von wenigstens einer Schicht auf ein Substrat und/oder zum Ausbilden von Substratstrukturen herangezogen wird. Da bei dem erfindungsgemäßen Verfahren lediglich die Lichtintensitäten der nullten Beugungsordnung gemessen zu werden brauchen, und daher sowohl der Meßapparate- als auch der Justieraufwand gering sind, und mit einer einzigen Meßvorrichtung wahlweise die verschiedensten Messungen, beispielsweise Schichtdicken-Messungen alleine oder in Verbindung mit den geometrischen Abmessungen der Substratstrukturen, oder die geometrischen Abmessungen der Substratstrukturen allein vorgenommen werden können, ist das erfindungsgemäße Verfahren in besonderem Maße inline-tauglich. Dies bedeutet, daß während der Fertigung der optischen Datenspeicher, beispielsweise bei der Herstellung der Substrate, beim Ausbilden von Substratstrukturen oder beim Beschichten der Substrate mit vorgegebenen Schichtdicken das erfindungsgemäße Verfahren unmittelbar einsetzbar ist und zur Regelung und Steuerung des Fertigungsverfahrens herangezogen werden kann. Dabei dienen die mit dem erfindungsgemäßen Verfahren ermittelten Daten für die Schichtdicken und/oder die Substratstruktur zur Neubestimmung der Werte für Stellgrößen der Produktionsanlage. Der Produktionsablauf kann auf diese Weise automatisch eingestellt, kontrolliert und geregelt werden.

Im Falle der Fertigung von optischen Datenspeichern wie CD's werden mit dem erfindungsgemäßen Verfahren direkt an den produzierten Produkten also dazu eingesetzt, die Ist-Größen zu bestimmen. Diese Ist-Größen werden dann unmittelbar dafür benutzt, neue Stellgrößen wie zum Beispiel die Sputterzeiten, die Sputterraten aber auch Drücke, Temperaturen und Gasflüsse während des Produktionsverfahrens der Produktionsanlage bereit zu stellen. Das erfindungsgemäße Verfahren ermöglicht es, Zielwerte in den Produktionsablauf einzugeben, die dann über die geschlössene Regeischleife erreicht werden. Da im Falle der Fertigung von optischen Datenspeichern neben den Schichtdicken auch die Groove-Geometrien mit dem erfindungsgemäßen Verfahren ermittelt werden, läßt sich auf diese Weise auch die Qualität der Substrate oder Rohlinge mit den geometrischen Strukturen, also die Qualität des Abformvorgangs, kontrollieren.

Ein Sonderfall des erfindungsgemäßen Verfahrens besteht darin, wenn die Substrate keine geometrische Struktur aufweisen also nur die Schichtdicken gemessen und/oder geregelt werden.

Vorzugsweise sind die Substrate Rohlinge für Datenspeichermedien, beispielsweise CD's, wobei die geometrischen Strukturen als Rillen oder Grooves im Rohling ausgebildet sind, und auf diesen Rohlingen wenigstens eine informationstragende Schicht aufgebracht wird. Dabei ist die informationstragende Schicht vorzugsweise eine Metallegierung, die durch Energie-Einwirkung eines Lichtstrahls zwischen 2 Phasen veränderbar ist. Die informationstragende Schicht ist dabei vorzugsweise zwischen zwei Buffer-Schichten ausgebildet.

Die Erfindung wird nachstehend an Hand von Ausführungsbeispielen unter Bezugnahme auf die Figuren erläutert. Es zeigen:
- Fig. 1: eine schematische Darstellung eines optischen Datenspeichers, bei dem das erfindungsgemäße Verfahren angewandt wird,
- Fig. 2 bis 4: Diagramme bei denen über die Wellenlänge die Reflexions-Lichtintensitätswerte aufgetragen sind; und
- Fig. 5: ein Ausführungsbeispiel zur Ermittlung der ortsaufgelösten Abmessungen der Substratstrukturen.

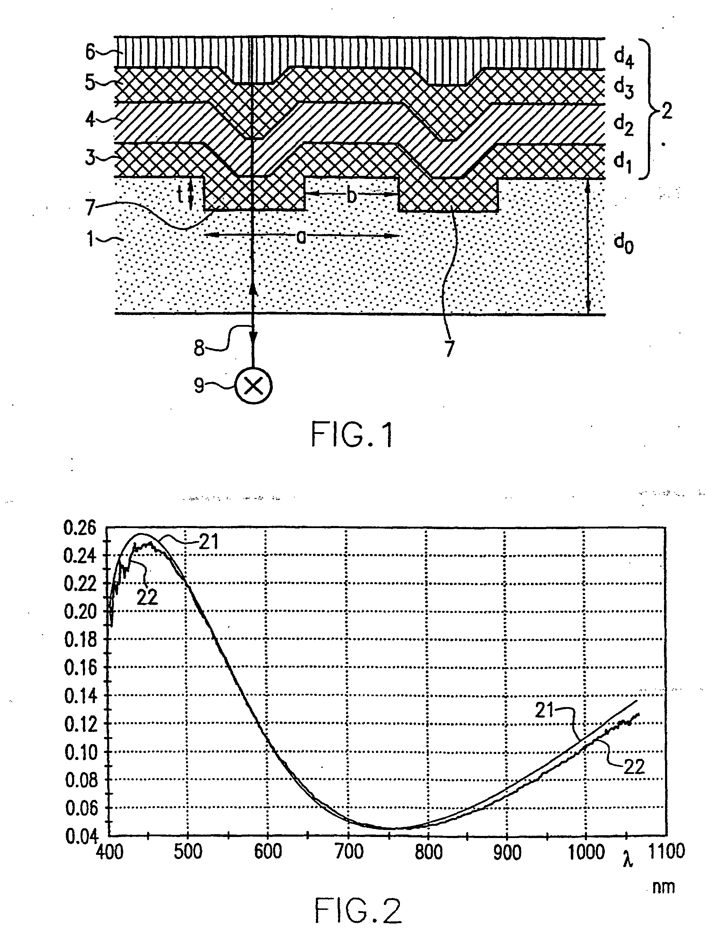

Figur 1 zeigt den Aufbau einer lesbaren, löschbaren und wieder beschreibbaren CD, auch unter der Bezeichnung CD-RW bekannt. Auf einem Substrat 1 aus Polycarbonat mit der Dicke d₀ sind in dieser Reihenfolge durch Kathodenzerstäubung folgende Schichten eines Schichtsystems 2 aufgebracht:
eine erste Buffer-Schicht 3 aus dielektrischem Material und eine Schichtdicke d₁ aufweist, die vorzugsweise aus einer Metalloxid-Verbindung besteht;
eine informationstragende Schicht 4, mit der Schichtdicke d₂, die aus einer Metallegierung besteht und durch Energieeinwirkung eines Laserstrahls zwischen zwei Phasen wechseln kann und daher auch als Fast-Change-Schicht bezeichnet wird; eine zweite Buffer-Schicht 5 mit der Schichtdicke d₃, die ebenfalls dielektrisch ist und vorzugsweise aus einer Metalloxid-Verbindung besteht, sowie einer vierten Schicht 6 mit einer Schichtdicke d₄, die aus einem Metall oder einer Metallegierung besteht und die zum Schreiben benötigte Energie des Laserstrahls ableitet. Die beiden Buffer-Schichten 3 und 5 schließen die informationstragende Schicht 4 zu deren Schutz ein und stellen darüber hinaus die optischen Eigenschaften der CD-RW in Bezug auf Intensitäts- und Phasendifferenz des Reflexionsvermögens zwischen dem beschriebenen und unbeschriebenen Zustand optimal ein. Die Schichtdicken der Schichten 3 bis 6 weisen bei diesem Ausführungsbeispiel die Werte d₁ = 96,0 nm, d₂ = 20 bis 25 nm, d₃ = 24,0 nm und d₄ = 100 bis 130 nm auf.

Im Substrat 1 sind sogenannte Grooves 7 ausgebildet, wobei beim dargestellten Ausführungsbeispiel beispielsweise deren Tiefe t = 40 nm, deren Breite b = 570 nm und deren periodische Abstände a zueinander = 1600 nm betragen.

Die Qualität derartiger Speichermedien hängt wesentlich von der Wahl und der Einhaltung der richtigen Schichtdicken im Schichtsystem 2 auf dem Substrat 1 ab. Daher ist es erforderlich, für die Qualitätskontrolle und/oder während des Beschichtungsvorgangs im Inline-Verfahren die Dicken der einzelnen Schichten 3 bis 6 jeweils möglichst genau zu bestimmen. Dies wird mit dem erfindungsgemäßen Verfahren erreicht, wobei ein Lichtstrahl 8 einer Lichtquelle 9 senkrecht von der den aufgebrachten Schichten abgewandten Seite des Substrats 1 auf das Substrat 1 gerichtet wird. Während des Meßverfahrens wird die Wellenlänge des auf das Substrat gerichteten Lichtstrahls 8 in einen Wellenlängenbereich von etwa 400 bis 1100 nm geändert.

Figur 2 zeigt ein Diagramm, bei dem das Reflexionsvermögen eines Schichtaufbaus, wie es beispielsweise in Figur 1 dargestellt ist, in Abhängigkeit von der Wellenlänge des eingestrahlten Lichtes dargestellt ist. Bei diesem Ausführungsbeispiel ist das Substrat1 planar, d. h. es weist keine Grooves auf, wie dies in Figur 1 dargestellt ist. Die Kurve 21 stellt das berechnete Reflexionsvermögen und die Kurve 22 das gemessene Reflexionsvermögen dar. Das Reflexionsvermögen wird aus zunächst vorgegebenen optischen Modellen für ein Schichtsystem berechnet. Danach werden mit jedem Rechenschritt die Schichtdicken und/oder die spektralen Materialparameter - beispielsweise der Brechungsindex n oder der Absorbtionsindex k im Falle einer Transmissionsmessung - solange variiert, bis eine minimale Abweichung zwischen Messung und Rechnung erreicht ist, wie sich dies aus Figur 2 ergibt. Aus diesem Verfahren ergeben sich dabei die Dicken der Schichten 3 bis 6 mit d₁ = 96,0 nm, d₂ = 20,1 nm, d₃ = 24,0 nm und d₄ = 130,0 nm.

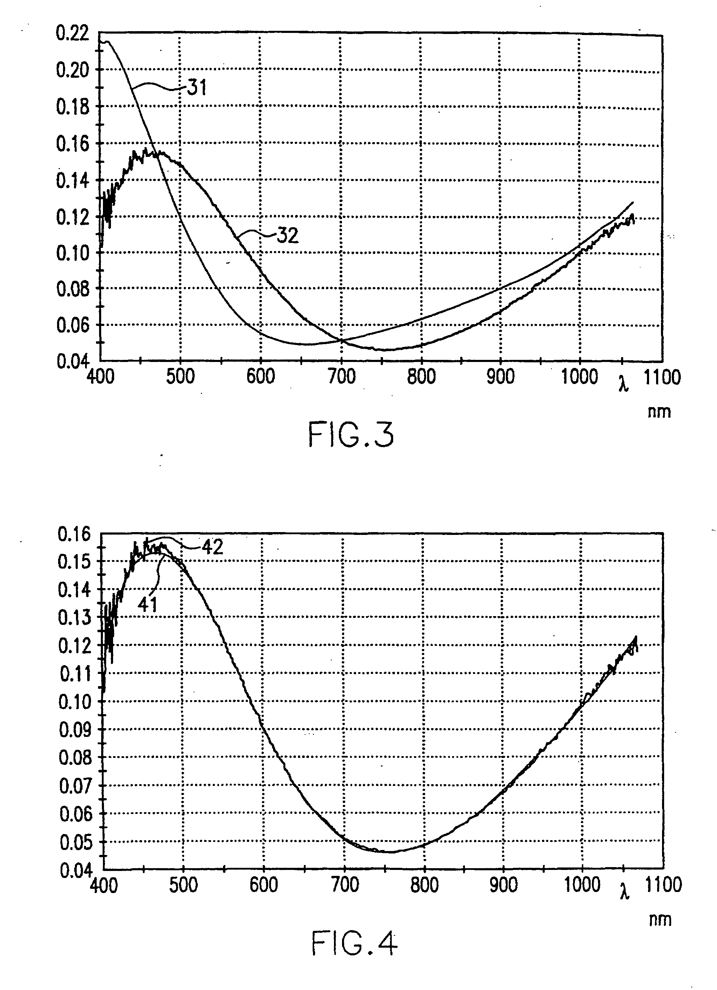

Wird dieses zuvor beschriebene Verfahren auf Schichtsysteme 3 angewandt, die sich auf Substraten 1 mit Grooves oder Rillen 7 aufgebracht sind oder werden, so führt dies zu falschen, inakzeptablen Ergebnissen, wie dies Figur 3 zeigt. Es ist nicht mehr möglich, eine ausreichende Übereinstimmung zwischen berechneten Reflexionswerte und der Kurve 32 für die gemessenen Reflexionswerte der Kurve 31 zu erreichen.

Um zu befriedigenden Ergebnissen zu kommen und auch bei Schichtsystemen auf Substraten mit Grooves die Schichtdicken zuverlässig messen zu können, werden erfindungsgemäß weiterhin die Lichtverluste in senkrechter Inzidenz auf die Probe berücksichtigt, wobei diese Lichtverluste durch die Grooves des Substrats entstehen. Gemäß der Erfindung wird dabei vorzugsweise die phasenrichtige Überlagerung elektromagnetischer Teilwellen an den Grooves und damit deren Interferenz berechnet. Dabei werden bei diesem Ausführungsbeispiel in die Variationen der Parameter auch die Breite b und die Tiefe t der Grooves 7 mit einbezogen.

Die in Figur 4 ersichtliche Übereinstimmung der berechneten Reflexionskurve 41 mit der gemessenen Reflexionskurve 42, das heißt also die Übereinstimmung zwischen Messung und Rechnung, ergibt sich dann, wenn die Breite b und die Tiefe t der Grooves 7 mit der Breite b und der Tiefe t der Grooves auf der gemessenen Probe übereinstimmen.

Bei einem Ausführungsbeispiel werden mit dem erfindungsgemäßen Verfahren bei unbekannter Geometrie der Grooves die Parameter Groovetiefe t = 40,5 nm, Groovebreite b = 501,0 nm, sowie die Dicken d₁ = 95,0 nm, d₂ = 20,6 nm, d₃ = 22,9 nm und d₄ = 130 nm der Schichten 3 bis 6 ermittelt.

Bei den zuvor beschriebenen Ausführungsbeispielen eines Schichtsystems 2 für eine CD-RW bestand die Schicht 3 aus ZnSSiox, die Schicht 4 aus AglnSbTe, die Schicht 5 aus ZnSSiox und die Schicht 6 aus ALTi. Diese Schichten befanden sich auf einem aus Polycarbonat bestehenden Substrat oder Rohling 1 mit Grooves 7.

Es ist jedoch auch möglich, die Groove-Geometrie des Substrats zunächst unabhängig von den Schichtdicken zu bestimmen um Kenntnis über die Groove-Geometrie zu haben. Danach wird erst die Schichtdikken-Messung gemäß dem erfindungsgemäßen Verfahren vorgenommen. Bei dem in Zusammenhang mit dem zuvor beschriebenen Ausführungsbeispiel verwendeten Schichtsystem ergeben sich bei einer bekannten Groove-Geometrie mit t = 41 nm, b = 485 nm und a = 1600 nm die Schichtdicken d₁ = 96,5 nm, d₂ = 17.1 nm, d₃ = 21,3 nm und d₄ = 100 nm für die Schichten 3 bis 6 in dieser Reihenfolge.

Gemäß einem weiteren Ausführungsbeispiel eines erfindungsgemäßen Verfahrens ist es auch möglich, die Groove-Geometrie über die Fläche einer gesamten CD hinweg ortsaufgelöst zu bestimmen.

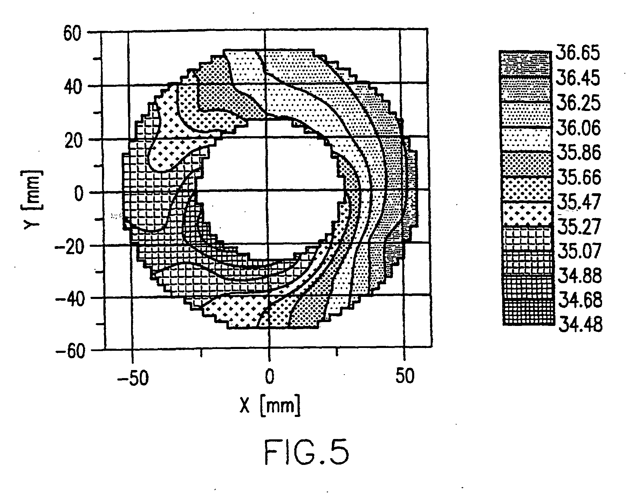

Figur 5 zeigt ein Meßergebnis für die Bestimmung der Groovetiefe t über einen Polycarbonat-Rohling hinweg, der Grooves aufweist. Dabei sind auf dem Rohling keine Schichten aufgebracht. Auf Grund der Unterschiedlichkeit der Groovetiefen t über die Substrat-Fläche hinweg ist es schnell und einfach möglich, Produktionsfehler beim Spritzgießen der Substrate oder Rohlinge festzustellen.

Das erfindungsgemäße Verfahren und ein auf diesem Verfahren beruhendes Meßgerät ist mit großem Vorteil in Produktionsanlagen für optische Speichermedien anwendbar. Die Reflexions- und/oder Transmissions-Lichtintensitätswerte werden spektral aufgelöst, in der nullten Beugungsordnung gemessen und daraus entweder gleichzeitig die Schichtdicken und die Groove-Geometrie ermittelt oder die Schichtdicken bei bekannter Groove-Geometrie bestimmt. Bei Abweichung der auf diese Weise ermittelten Ist-Größen der Schichtdicken von den Soll-Werten werden die Werte für die Stellgrößen der Produktionsanlage, beispielsweise die Sputterrate und/oder die Sputterzeit neu bestimmt oder eingestellt und an die Produktionsanlage übermittelt.

Die Erfindung wurde zuvor an hand bevorzugter Ausführungsbeispiele erläutert. Dem Fachmann sind jedoch Abwandlungen und Ausgestaltungen möglich, ohne daß dadurch der Erfindungsgedanke verlassen wird. Statt der in zuvor beschriebenen Ausführungsbeispiele verwendeten Reflexions-Messungen ist es auch möglich, das erfindungsgemäße Verfahren im Zusammenhang mit Transmissions-Messungen einzusetzen.

## Patentansprüche

1. Verfahren zum Bestimmen der Dicke wenigstens einer Schicht (3 bis 6) auf einem Substrat (1), das zu Lichtbeugung führende geometrische Strukturen (7) aufweist, durch
- Messen von Reflexions- und/oder Transmissions-Lichtintensitäts-Werten nullter Beugungsordnung in Abhängigkeit von der Wellenlänge,
- Berechnen der Reflexions- und/oder Transmissions-Lichtintensitäts-Werte unter Verwendung eines Iterationsmodells, in das die einzelnen Schichtparameter und die geometrischen Abmessungen der geometrischen Strukturen (7) des Substrats (1) als weitere Parameter eingehen, und
- Ändern der Schichtparameter bis zur Herbeiführung einer Übereinstimmung zwischen den gemessenen und berechneten Werten.

2. Verfahren nach Anspruch 1, **dadurch gekennzeichnet, daß** die geometrischen Abmessungen der Strukturen (7) bestimmt werden.

3. Verfahren nach einem der vorhergehenden Ansprüche, **dadurch gekennzeichnet, daß** die ermittelten Daten der Schichtdicken (n) und/oder der geometrischen Struktur (7) zur Regelung von Fertigungsverfahren zum Aufbringen von wenigstens einer Schicht (3 bis 6) auf ein Substrat (1) und/oder zum Ausbilden von Substratstrukturen (7) herangezogen werden.

4. Verfahren nach einem der vorhergehenden Ansprüche, **dadurch gekennzeichnet, daß** die Substrate (1) Rohlinge für Datenspeichermedien sind.

5. Verfahren nach Anspruch 4, **dadurch gekennzeichnet, daß** geometrische Strukturen (7) als Rillen im Rohling ausgebildet sind.

6. Verfahren nach einem der vorhergehenden Ansprüche, **dadurch gekennzeichnet, daß** wenigstens eine Schicht (3 bis 6) eine informationstragende Schicht (4) ist .

7. Verfahren nach Anspruch 6, **dadurch gekennzeichnet, daß** die informationstragende Schicht (4) eine Metall-Legierung ist, die durch Energie-Einwirkung eines Lichtstrahls zwischen zwei Phasen veränderbar ist.

8. Verfahren nach Anspruch 6 oder 7, **dadurch gekennzeichnet, daß** die informationstragende Schicht (4) zwischen zwei Buffer-Schichten (3, 5) ausgebildet ist.

9. Verfahren nach einem der vorhergehenden Ansprüche, **gekennzeichnet durch** die Verwendung bei der Herstellung von optischen Datenspeicher-Medien.

## Claims

1. Method of determining the thickness of at least one layer (3 to 6) on a substrate (1), which has geometric structures (7) leading to light diffraction, by
- measuring reflection and/or transmission light intensity values of the zero order of diffraction in dependence on the wavelength,
- calculating the reflection and/or transmission light intensity values with use of an iteration model into which the individual layer parameters and the geometric dimensions of the geometric structures (7) of the substrate (1) enter as further parameters and
- changing the layer parameters until production of a correspondence between the measured and calculated values.

2. Method according to claim 1, **characterised in that** the geometric dimensions of the structures (7) are determined.

3. Method according to one of the preceding claims, **characterised in that** the ascertained data of the layer thicknesses (n) and/or of the geometric structure (7) are utilised for regulation of production methods for the application of at least one layer (3 to 6) on a substrate (1) and/or for forming substrate structures (7).

4. Method according to one of the preceding claims, **characterised in that** the substrates (1) are blanks for data storage media.

5. Method according to claim 4, **characterised in that** geometric structures (7) are formed in the blank as grooves.

6. Method according to one of the preceding claims, **characterised in that** at least one layer (3 to 6) is an information-bearing layer (4).

7. Method according to claim 6, **characterised in that** the information-bearing layer (4) is a metal alloy which is changeable between two phases by energy action of a light beam.

8. Method according to claim 6 or 7, **characterised in that** the information-bearing layer (4) is constructed between two buffer layers (3, 5).

9. Method according to one of the preceding claims, **characterised by** the use of optical data storage media.

## Revendications

1. Procédé pour déterminer l'épaisseur d'au moins une couche (3 à 6) sur un substrat (1), qui présente des structures géométriques (7) entraînant une diffraction de lumière, par
- la mesure de valeurs d'intensité de lumière de réflexion et/ou de transmission d'un ordre de diffraction nul en fonction de la longueur d'onde,
- le calcul des valeurs d'intensité de lumière de réflexion et/ou de transmission en utilisant un modèle d'itération dans lequel entrent les paramètres de couche individuels et les dimensions géométriques des structures géométriques (7) du substrat (1) comme paramètres additionnels et
- la modification des paramètres de couche jusqu'à l'obtention d'une coïncidence entre les valeurs mesurées et calculées.

2. Procédé selon la revendication 1, **caractérisé en ce que** les dimensions géométriques des structures (7) sont déterminées.

3. Procédé selon l'une des revendications précédentes, **caractérisé en ce que** les données déterminées des épaisseurs de couche (n) et/ou de la structure géométrique (7) sont utilisées pour la régulation de procédés de fabrication pour appliquer au moins une couche (3 à 6) à un substrat (1) et/ou pour réaliser des structures de substrat (7).

4. Procédé selon l'une des revendications précédentes, **caractérisé en ce que** les substrats (1) sont des ébauches pour des supports de stockage de données.

5. Procédé selon la revendication 4, **caractérisé en ce que** des structures géométriques (7) sont réalisées comme rainures dans l'ébauche.

6. Procédé selon l'une des revendications précédentes, **caractérisé en ce qu'**au moins une couche (3 à 6) est une couche (4) portant des informations.

7. Procédé selon la revendication 6, **caractérisé en ce que** la couche (4) portant des informations est un alliage métallique qui peut être modifié sous l'effet d'énergie d'un rayon de lumière entre deux phases.

8. Procédé selon la revendication 6 ou 7, **caractérisé en ce que** la couche (4) portant des informations est réalisée entre deux couches-tampons (3, 5).

9. Procédé selon l'une des revendications précédentes, **caractérisé par** l'utilisation lors de la fabrication de supports de stockage de données optiques.
